# EUROPEAN PATENT APPLICATION

(11) **EP 4 841 849 A1**
(43) Date of publication of application: **18.11.2026**
(21) Application number: 26162623.8
(22) Date of filing: 05.03.2026
(51) Int. Cl.: H02J 3/001, H02J 3/38, H02J 101/28

(54) **POWER GENERATING ASSET CONTROL IN RESPONSE TO A GRID EVENT**

(30) Priority: 13.03.2025 US 202519078671
(71) Applicant: GE Vernova Infrastructure Technology LLC, Greenville, SC 29615 (US)
(72) Inventor: Kammer, Leonardo Cesar, Schenectady, NY 12345 (US); Venkitanarayanan, Vaidhya Nath, Schenectady, NY 12345 (US); Ganireddy, Govardhan, Salem, VA 24153 (US)
(74) Representative: Zimmermann & Partner Patentanwälte mbB

(57) **Abstract**

A method for controlling a power generating asset includes calculating minimum and maximum recovery times at an end of a voltage-drop grid event as a function of a pre-voltage-drop power and a post-voltage-drop power. The method also includes defining a maximum recovery rate of power recovery based on grid strength and determining a first rate of the power recovery such that the pre-voltage-drop power is reached at the minimum recovery time. Further, the method includes increasing the post-voltage-drop power by the first rate until a first recovery time in which condition(s) indicate further power increase is unfavorable and maintaining the power recovery at a minimum defined recovery rate from the first recovery time to a second recovery time. Moreover, the method includes determining a second rate of the power recovery to be a minimum value between the maximum recovery rate and a rate of the power recovery required to reach the pre-voltage-drop power at the minimum recovery time. In addition, the method includes increasing the power recovery by the second rate and applying the maximum recovery rate until the pre-voltage-drop power is reached before the maximum recovery time if, at any time between the first recovery time and the second recovery time, the maximum recovery rate needs to be applied in order to meet the maximum recovery time.

## Description

### FIELD

The present disclosure relates in general to power generating assets, and more particularly to systems and methods for controlling a power generating asset in response to a voltage-drop grid event.

### BACKGROUND

Power generating assets take a variety of forms and rely on renewable and/or nonrenewable sources of energy. Those power generating assets relying on renewable sources of energy may generally be considered one of the cleanest, most environmentally friendly energy sources presently available. For example, wind turbines have gained increased attention in this regard. A modern wind turbine typically includes a tower, a generator, a gearbox, a nacelle, and one or more rotor blades. The nacelle includes a rotor coupled to the gearbox and to the generator. The rotor and the gearbox are mounted on a bedplate support frame located within the nacelle. The rotor blades capture kinetic energy of wind using known airfoil principles. The rotor blades transmit the kinetic energy in the form of rotational energy so as to turn a shaft coupling the rotor blades to the gearbox, or if the gearbox is not used, directly to the generator. The generator then converts the mechanical energy to electrical energy and the electrical energy may be transmitted to a converter and/or a transformer housed within the tower and subsequently deployed to a utility grid. Modern wind power generation systems typically take the form of a wind farm having multiple wind turbine generators that are operable to supply power to a transmission system providing power to an electrical grid.

Wind turbines can be distinguished in two types: fixed speed and variable speed turbines. Conventionally, variable speed wind turbines are controlled as current sources connected to an electrical grid. In other words, the variable speed wind turbines rely on a grid frequency detected by a phase locked loop (PLL) as a reference and inject a specified amount of current into the grid. The conventional current source control of the wind turbines is based on the assumptions that the grid voltage waveforms are fundamental voltage waveforms with fixed frequency and magnitude and that the penetration of wind power into the grid is low enough so as to not cause disturbances to the grid voltage magnitude and frequency. Thus, the wind turbines simply inject the specified current into the grid based on the fundamental voltage waveforms.

Voltage-drop grid events, such as low-voltage ride through (LVRT) events, produce large transient mechanical loads in the one or more components of the wind turbine. These events can reach large magnitudes that can damage components of the wind turbine and can also destabilize weak grids. Accordingly, grid codes have been implemented in various regions that establish minimum and maximum rates of active power recovery after LVRT events in order to avoid destabilizing weak grids.

In view of the foregoing, the art is continuously seeking new and improved systems and methods for controlling a power generating asset in response to a voltage-drop grid event.

### BRIEF DESCRIPTION

Aspects and advantages of the invention will be set forth in part in the following description, or may be obvious from the description, or may be learned through practice of the invention.

In an aspect, the present disclosure is directed to a method for controlling a power generating asset connected to an electrical grid in response to a voltage-drop grid event occurring in the electrical grid according to claim 1. The method includes calculating minimum and maximum recovery times at an end of the voltage-drop grid event as a function of a pre-voltage-drop power and a post-voltage-drop power. The method also includes defining a maximum recovery rate of power recovery based on grid strength. Further, the method includes determining a first rate of the power recovery such that the pre-voltage-drop power is reached at the minimum recovery time. Moreover, the method includes increasing the post-voltage-drop power by the first rate until a first recovery time in which condition(s) indicate further power increase is unfavorable. The method also includes maintaining the power recovery at a minimum defined recovery rate from the first recovery time to a second recovery time. Moreover, the method includes determining a second rate of the power recovery to be a minimum value between the maximum recovery rate and a rate of the power recovery required to reach the pre-voltage-drop power at the minimum recovery time. In addition, the method includes increasing the power recovery by the second rate. Further, the method includes applying the maximum recovery rate until the pre-voltage-drop power is reached before the maximum recovery time if, at any time between the first recovery time and the second recovery time, the maximum recovery rate needs to be applied in order to meet the maximum recovery time.

In another aspect, the present disclosure is directed to a wind turbine power system connected to an electrical grid in response to a voltage-drop grid event occurring in the electrical grid according to the independent device claim. The wind turbine power system includes a generator, a power converter coupled to the generator, and a controller having at least one processor configured to perform a plurality of operations. The plurality of operations include, but are not limited to calculating minimum and maximum recovery times at an end of the voltage-drop grid event as a function of a pre-voltage-drop power and a post-voltage-drop power, defining a maximum recovery rate of power recovery based on grid strength of the electrical grid, determining a first rate of power recovery such that the pre-voltage-drop power is reached at the minimum recovery time, increasing the post-voltage-drop power by the first rate until a first recovery time in which one or more conditions indicate further power increase is unfavorable, maintaining the power recovery at a minimum defined recovery rate from the first recovery time to a second recovery time, determining a second rate of the power recovery to be a minimum value between the maximum recovery rate and a rate of the power recovery required to reach the pre-voltage-drop power at the minimum recovery time, increasing the power recovery by the second rate of the power recovery, and applying the maximum recovery rate until the pre-voltage-drop power is reached before the maximum recovery time if, at any time between the first recovery time and the second recovery time, the maximum recovery rate needs to be applied in order to meet the maximum recovery time.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a power generating asset configured as a wind turbine power system according to the present disclosure;
FIG. 2 illustrates a schematic diagram of an embodiment of an electrical system for use with a power generating asset configured as a wind turbine power system according to the present disclosure;
FIG. 3 illustrates a block diagram of an embodiment of a controller for use with a power generating asset according to the present disclosure;
FIG. 4 illustrates a simplified, schematic diagram of the electrical system of FIG. 2, particularly illustrating power flow during normal operations and during one or more grid events according to the present disclosure;
FIG. 5 illustrates a flow diagram of an embodiment of a method for controlling a power generating asset connected to an electrical grid in response to a voltage-drop grid event occurring in the electrical grid according to the present disclosure; and
FIG. 6 illustrates a graphical representation of an embodiment of power (y-axis) versus time (x-axis) when a method for controlling the power generating asset in response to a voltage-drop grid event is implemented according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention. For instance, features illustrated or described as part of an embodiment can be used with another embodiment to yield a still further embodiment. Thus, it is intended that the present invention covers such modifications and variations as come within the scope of the appended claims.

As used herein, the terms "first", "second", and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

In certain regions, grid codes establish minimum and maximum rates of active power recovery after a low-voltage ride through (LVRT) event or a multi-fault ride through (MFRT) event, in order to avoid destabilizing weak grids. Accordingly, the present disclosure is directed to systems and methods controlling a power generating asset connected to an electrical grid in response to an LVRT or MFRT event. More specifically, the present disclosure combines a delayed torque recovery (DTR) function for loads mitigation (e.g., which typically focuses on the torsional movement in the drivetrain) with additional steps that maintain compliance with such grid codes. For example, in an embodiment, a controller is configured to calculate minimum and maximum recovery times at end of the grid-voltage event based on a difference between a pre-fault power and a post-fault power, as a proportion of the minimum and maximum times established for full power recovery (e.g., from 0% to 100%). Further, in an embodiment, the controller is configured to determine a target rate of power recovery such that pre-fault power production is reached at the minimum recovery time. The controller may then activate the DTR function to maintain the power recovery at a minimum-defined rate (e.g., default set to 0 PU/s) while conditions are unfavorable for power increase (e.g., due to mechanical loads, while the generator speed is decreasing). After activation of the DTR function, the new target rate of power recovery is determined again, to reach pre-fault power at the minimum recovery time. A maximum permissible rate of recovery is also defined based on the grid strength. As such, if, at any time, the maximum recovery rate will be exceeded, the maximum recovery rate is used for power recovery, and in that case the minimum recovery time is no longer feasible. The DTR function can then be deactivated as soon as a time counter reaches the time limit to reach the pre-fault power at the maximum time, under the maximum permissible power recovery rate.

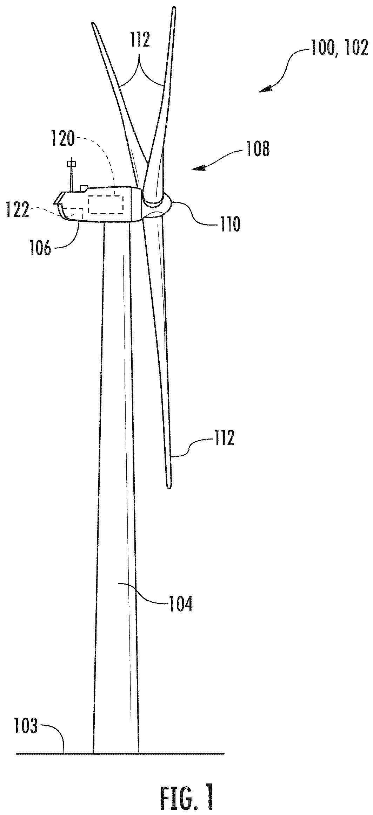

Referring now to the drawings, FIG. 1 illustrates a perspective view of an embodiment of a power generating asset 100 according to the present disclosure. As shown, the power generating asset 100 may be configured as a wind turbine 102. In an additional embodiment, the power generating asset 100 may, for example, be configured as a hydroelectric plant, a fossil fuel generator, and/or a hybrid power generating asset.

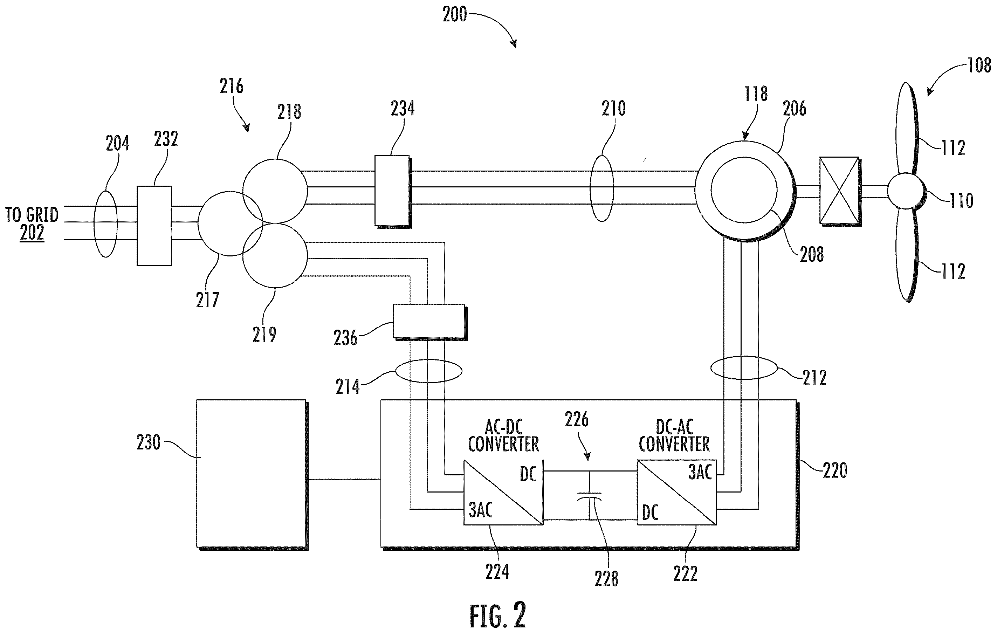

When configured as a wind turbine 102, the power generating asset 100 may generally include a tower 104 extending from a support surface 103, a nacelle 106 mounted on the tower 104, and a rotor 108 coupled to the nacelle 106. The rotor 108 includes a rotatable hub 110 and at least one rotor blade 112 coupled to and extending outwardly from the hub 110. For example, in the illustrated embodiment, the rotor 108 includes three rotor blades 112. However, in an alternative embodiment, the rotor 108 may include more or less than three rotor blades 112. Each rotor blade 112 may be spaced about the hub 110 to facilitate rotating the rotor 108 to enable kinetic energy to be transferred from the wind into usable mechanical energy, and subsequently, electrical energy. For instance, the hub 110 may be rotatably coupled to an electric generator 118 (FIG. 2) of an electrical system 200 (FIG. 2) positioned within the nacelle 106 to permit electrical energy to be produced.

The wind turbine 102 may also include a controller 120 centralized within the nacelle 106. However, in other embodiments, the controller 120 may be located within any other component of the wind turbine 102 or at a location outside the wind turbine 102. Further, the controller 120 may be communicatively coupled to any number of the components of the wind turbine 102 in order to control the components. As such, the controller 120 may include a computer or other suitable processing unit. Thus, in several embodiments, the controller 120 may include suitable computer-readable instructions that, when implemented, configure the controller 120 to perform various different functions, such as receiving, transmitting and/or executing wind turbine control signals.

Furthermore, as depicted in FIG. 1, in an embodiment, the power generating asset 100 may include at least one operational sensor 122. The operational sensor(s) 122 may be configured to detect a performance of the power generating asset 100, e.g., in response to the environmental condition. In an embodiment, the operational sensor(s) 122 may be configured to monitor a plurality of electrical conditions, such as slip, stator voltage and current, rotor voltage and current, line-side voltage and current, DC-link charge and/or any other electrical condition of the power generating asset 100.

It should also be appreciated that, as used herein, the term "monitor" and variations thereof indicates that the various sensors of the power generating asset 100 may be configured to provide a direct measurement of the parameters being monitored or an indirect measurement of such parameters. Thus, the sensor(s) 122 described herein may, for example, be used to generate signals relating to the parameter being monitored, which can then be utilized by the controller 120 to determine a condition or response of the power generating asset 100.

Referring now to FIG. 2, an embodiment of an electrical system 200 of the power generating asset 100 is illustrated. As shown, the generator 118 may be coupled to the rotor 108 for producing electrical power from the rotational energy generated by the rotor 108. Accordingly, in an embodiment, the electrical system 200 may include various components for converting the kinetic energy of the rotor 108 into an electrical output in an acceptable form to an electrical grid 202 via grid bus 204. For example, in an embodiment, the generator 118 may be a double-fed induction generator (DFIG) having a stator 206 and a generator rotor 208. The generator 118 may be coupled to a stator bus 210 and a power converter 220 via a rotor bus 212. In such a configuration, the stator bus 210 may provide an output multiphase power (e.g., three-phase power) from a stator of the generator 118, and the rotor bus 212 may provide an output multiphase power (e.g., three-phase power) of the generator rotor 208 of the generator 118. Additionally, the generator 118 may be coupled via the rotor bus 212 to a rotor side converter 222. The rotor side converter 222 may be coupled to a line-side converter 224 which, in turn, may be coupled to a line-side bus 214.

In an embodiment, the rotor side converter 222 and the line-side converter 224 may be configured for normal operating mode in a three-phase, pulse width modulation (PWM) arrangement using insulated gate bipolar transistors (IGBTs) Other suitable switching devices may be used, such as insulated gate commuted thyristors, MOSFETs, bipolar transistors, silicone-controlled rectifiers, and/or other suitable switching devices. Furthermore, as shown, the rotor side converter 222 and the line-side converter 224 may be coupled via a DC link 226 across a DC link capacitor 228.

In an embodiment, the power converter 220 may be coupled to the controller 120 configured as a converter controller 230 to control the operation of the power converter 220. For example, the converter controller 230 may send control commands to the rotor side converter 222 and the line-side converter 224 to control the modulation of switching elements used in the power converter 220 to establish a desired generator torque setpoint and/or power output.

As further depicted in FIG. 2, the electrical system 200 may, in an embodiment, include a transformer 216 coupling the power generating asset of 100 to the electrical grid 202. The transformer 216 may, in an embodiment, be a three-winding transformer which includes a high voltage (e.g., greater than 12 KVAC) primary winding 217. The high voltage primary winding 217 may be coupled to the electrical grid 179. The transformer 216 may also include a medium voltage (e.g., 6 KVAC) secondary winding 218 coupled to the stator bus 210 and a low voltage (e.g., 575 VAC, 690 VAC, etc.) auxiliary winding 219 coupled to the line bus 214. It should be appreciated that the transformer 216 can be a three-winding transformer as depicted, or alternatively, a two-winding transformer having only the primary winding 217 and the secondary winding 218, a four-winding transformer having the primary winding 217, the secondary winding 218, the auxiliary winding 219, and an additional auxiliary winding, or may have any other suitable number of windings.

In an embodiment, the electrical system 200 may include various protective features (e.g., circuit breakers, fuses, contactors, and other devices) to control and/or protect the various components of the electrical system 200. For example, the electrical system 200 may, in an embodiment, include a grid circuit breaker 232, a stator bus circuit breaker 234, and/or a line bus circuit breaker 236. The circuit breaker(s) 232, 234, 236 of the electrical system 200 may connect or disconnect corresponding components of the electrical system 200 when a condition of the electrical system 200 approaches a threshold (e.g., a current threshold and/or an operational threshold) of the electrical system 200.

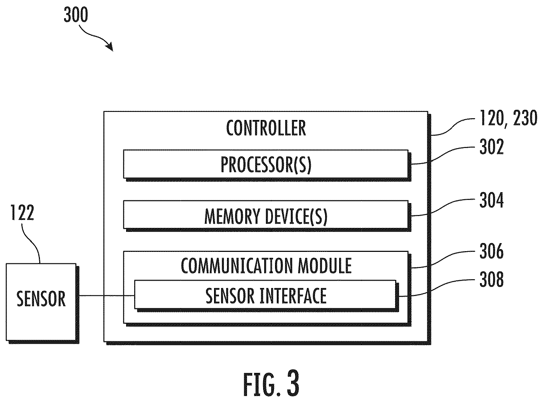

Referring now to FIG. 3, a block diagram of an embodiment of suitable components that may be included within a controller 300 of the power generating asset 100, such as the wind turbine 102, is illustrated. For example, as shown, the controller 300 may be the turbine controller 120 or the converter controller 230. Further, as shown, the controller 300 includes one or more processor(s) 302 and associated memory device(s) 304 configured to perform a variety of computer-implemented functions (e.g., performing the methods, steps, calculations and the like and storing relevant data as disclosed herein).

Additionally, the controller 300 may also include a communications module 306 to facilitate communications between the controller 300, and the various components of the power generating asset 100. Further, the communications module 306 may include a sensor interface 308 (e.g., one or more analog-to-digital converters) to permit signals transmitted from the sensor(s) 122 to be converted into signals that can be understood and processed by the processors 302. It should be appreciated that the sensor(s) 122 may be communicatively coupled to the communications module 306 using any suitable means. For example, the sensor(s) 122 may be coupled to the sensor interface 308 via a wired connection. However, in other embodiments, the sensor(s) 122 may be coupled to the sensor interface 308 via a wireless connection, such as by using any suitable wireless communications protocol known in the art.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 304 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 304 may generally be configured to store suitable computer-readable instructions that, when implemented by the processor(s) 302, configure the controller 300 to perform various functions as described herein, as well as various other suitable computer-implemented functions.

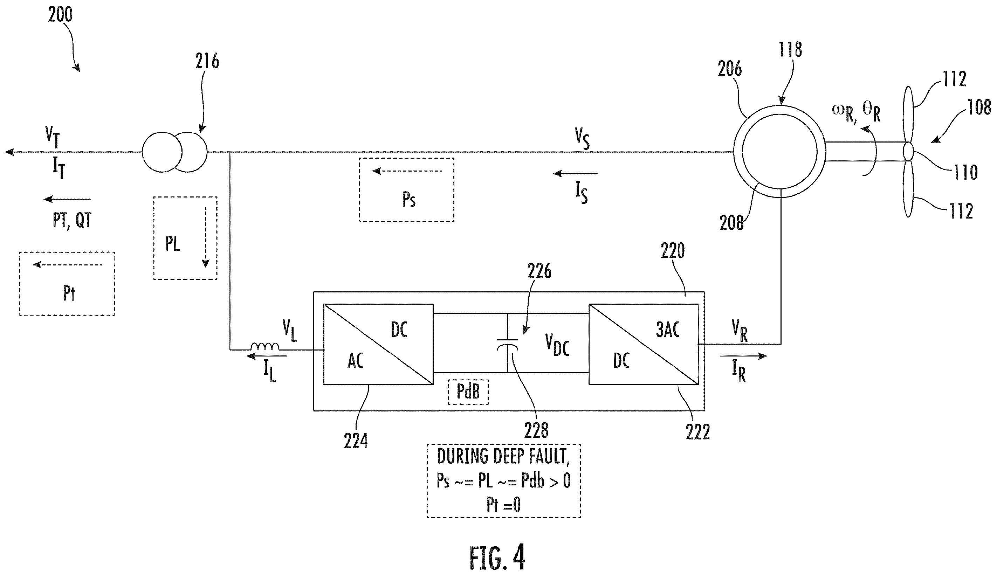

Referring now to FIG. 4, a simplified, schematic diagram of the electrical system 200 of FIG. 2 is illustrated, particularly illustrating power flow during normal operations and during one or more grid events according to the present disclosure. More specifically, as shown, the power flow during normal operations is represented by the solid arrows throughout the system 200, whereas the power flow during the grid event(s) is represented by the dotted arrows within the dotted boxes throughout the system 200. Moreover, as shown, the power flow at the output of the system 200 (i.e., Pt and PT in FIG. 4) reflects the grid power/net power output of the system 200. Further, in an embodiment, the generator power is equal to the electric torque on the generator 118 multiplied by the operating speed, which is reflected as power flow through the stator and rotor windings of the generator 118. Most of the generator power flows through the stator (i.e., Ps in FIG. 4) during normal and grid-fault conditions.

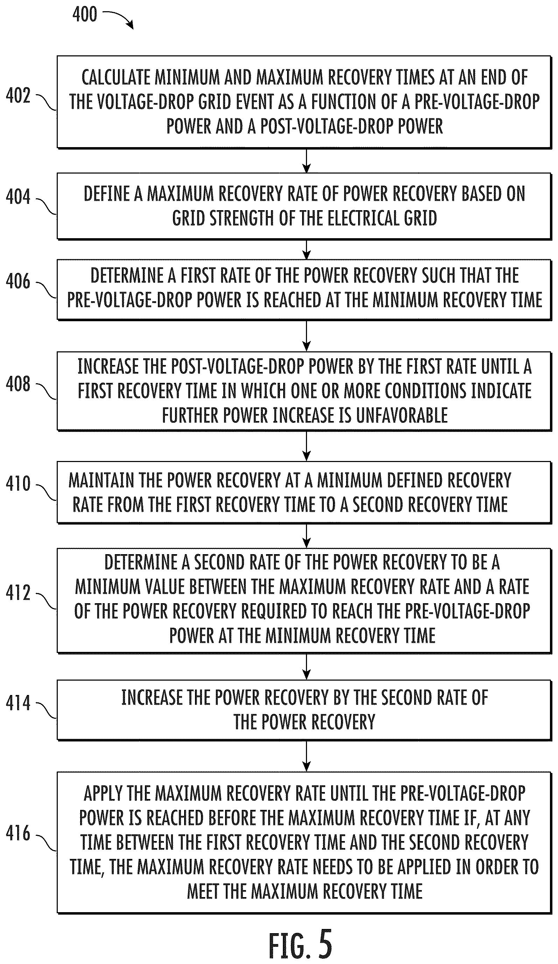

Referring now to FIG. 5, a flow diagram of an embodiment of a method 400 for controlling the power generating asset 100 connected to an electrical grid in response to a voltage-drop grid event occurring in the electrical grid is presented according to the present disclosure. A voltage-drop event, as described herein, is generally associated with a dip in voltage in the electrical grid 202 that can be detected. In particular, the voltage-drop grid event can be a low-voltage ride through (LVRT) event (i.e., a single LVRT event occurring in the electrical grid 202) or a multi-fault ride through (MFRT) event (i.e., one LVRT event following by one or more subsequent LVRT events occurring in the electrical grid 202). In some embodiments, the voltage-drop grid event(s) can be detected based at least in part on data received from various sensors 122 (FIG. 3) associated with the wind turbine power system 200. The method 400 may be implemented using, for instance, the controller 300 of the present disclosure discussed above with references to FIGS. 2-4. FIG. 5 depicts steps performed in a particular order for purposes of illustration and discussion. Those of ordinary skill in the art, using the disclosures provided herein, will understand that various steps of the method 400, or any of the methods disclosed herein, may be adapted, modified, rearranged, performed simultaneously, or modified in various ways without deviating from the scope of the present disclosure.

As shown at (402), the method 400 includes calculating minimum and maximum recovery times at an end of the voltage-drop grid event as a function of a pre-voltage-drop power and a post-voltage-drop power. As shown at (404), the method 400 includes defining a maximum recovery rate of power recovery based on grid strength of the electrical grid. As shown at (406), the method 400 includes determining a first rate of power recovery such that the pre-voltage-drop power is reached at the minimum recovery time. As shown at (408), the method 400 includes increasing the post-voltage-drop power by the first rate until a first recovery time in which one or more conditions indicate further power increase is unfavorable. As shown at (410), the method 400 includes maintaining the power recovery at a minimum defined recovery rate from the first recovery time to a second recovery time. As shown at (412), the method 400 includes determining a second rate of the power recovery to be a minimum value between the maximum recovery rate and a rate of the power recovery required to reach the pre-voltage-drop power at the minimum recovery time. As shown at (414), the method 400 includes increasing the power recovery by the second rate of the power recovery. As shown at (416), the method 400 includes applying the maximum recovery rate until the pre-voltage-drop power is reached before the maximum recovery time if, at any time between the first recovery time and the second recovery time, the maximum recovery rate needs to be applied in order to meet the maximum recovery time.

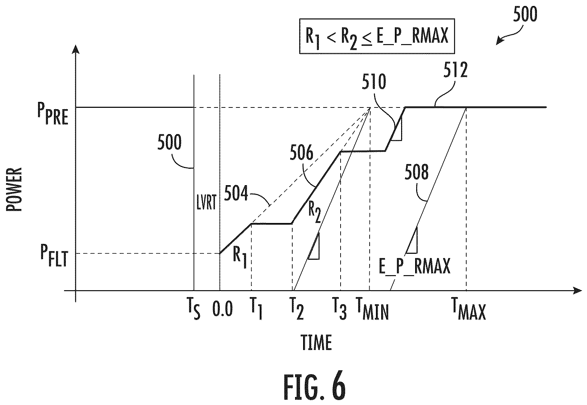

The method 400 of FIG. 5 can be better understood with reference to FIG. 6. In particular, FIG. 6 illustrates a graphical representation 500 of an embodiment of power (y-axis) versus time (x-axis) when the method 400 for controlling the power generating asset 100 in response to a voltage-drop grid event is implemented according to the present disclosure.

In particular, as shown in the illustrated embodiment, the power generating asset 100 is operated at a pre-voltage-drop power (e.g., Pₚᵣₑ) during normal operation. At time T_{S}, a voltage-drop grid event (e.g., LVRT) 502 occurs in the electrical grid. An end of the voltage-drop grid event is represented by time 0.0. Thus, in an embodiment, at the end of the voltage-drop grid event, power recovery begins. More specifically, in an embodiment, during power recovery, the controller 300 is configured to calculate minimum and maximum recovery times (e.g., Tₘᵢₙ and Tₘₐₓ) at the end of the voltage-drop grid event. For example, in an embodiment, the controller 300 may calculate the minimum and maximum recovery times as a function of the pre-voltage-drop power (e.g., Pₚᵣₑ) and the post-voltage-drop power (e.g., P_{flt}), e.g., by determining a difference between the pre-voltage-drop power (e.g., Pₚᵣₑ) and the post-voltage-drop power (e.g., P_{flt}), as a proportion of minimum and maximum times established for full power recovery (e.g., from 0% to 100%).

Further, in an embodiment, the controller 300 is configured to determine a first rate (e.g., R₁) of the power recovery such that the pre-voltage-drop power is reached at the minimum recovery time. In FIG. 6, for example, the first rate (e.g., R₁) is represented by line 504. Thus, as shown, the controller 300 is configured to increase the post-voltage-drop power (e.g., P_{flt}) by the first rate until a first recovery time (e.g., T₁) in which one or more conditions indicate further power increase is unfavorable. For example, in such embodiments, the condition(s) unfavorable for further power increase may include conditions that cause increased mechanical loads while generator speed is decreasing.

Thus, as shown at T₁, the controller 300 is configured to maintain the power recovery at a minimum defined recovery rate from the first recovery time (e.g., T₁) to a second recovery time (e.g., T₂). In an embodiment, as shown, the minimum defined recovery rate may be 0 per-unit per second (PU/sec). Furthermore, in an embodiment, the controller 300 may be configured to maintain the power recovery at the minimum defined recovery rate by activating a delayed torque recovery (DTR) function to maintain the power recovery at the minimum recovery rate while certain conditions are unfavorable for increasing power.

Accordingly, as shown at T₂, the controller 300 is configured to determine a second rate (e.g., R₂) of the power recovery to again reach the pre-voltage-drop power at the minimum recovery time. In FIG. 6, for example, the second rate (e.g., R₂) is represented by line 506. Thus, as shown between T₂ and time T₃, the controller is configured to increase the power recovery by the second rate (e.g., R₂). In certain embodiments, the controller 300 is configured to determine the second rate (e.g., R₂) after activating the DTR function.

In further embodiments, and still referring to FIG. 6, the controller 300 is configured to define a maximum recovery rate (e.g., E_P_Rmax) of the power recovery based on grid strength of the electrical grid. In FIG. 6, for example, the maximum recovery rate (e.g., E_P_Rmax) is represented by line 508. Accordingly, if, at any time, the maximum recovery rate (e.g., E_P_Rmax) will be exceeded, the controller 300 is configured to increase the second rate (e.g., R₂) to the maximum recovery rate (e.g., E_P_Rmax) for the power recovery (as shown at 510) until the pre-voltage-drop power is reached before the maximum recovery time (e.g., Tₘₐₓ) (as shown at 512), and in that case the minimum recovery time is no longer feasible.

In additional embodiments, the controller 300 may also be configured to deactivate the DTR function as soon as a time counter reaches a time limit to reach the pre-voltage-drop power (e.g., Pₚᵣₑ) at the maximum recovery time (e.g., Tₘₐₓ) under the maximum recovery rate. Further, in an embodiment, the total recovery time may be about one (1) second to about 10 seconds. It should be understood that the total recovery time may generally be defined by applicable grid codes, such as IEEE2800.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Further aspects of the invention are provided by the subject matter of the following clauses:
A method for controlling a power generating asset connected to an electrical grid in response to a voltage-drop grid event occurring in the electrical grid, the method comprising: calculating minimum and maximum recovery times at an end of the voltage-drop grid event as a function of a pre-voltage-drop power and a post-voltage-drop power; defining a maximum recovery rate of power recovery based on grid strength of the electrical grid; determining a first rate of the power recovery such that the pre-voltage-drop power is reached at the minimum recovery time; increasing the post-voltage-drop power by the first rate until a first recovery time in which one or more conditions indicate further power increase is unfavorable; maintaining the power recovery at a minimum defined recovery rate from the first recovery time to a second recovery time; determining a second rate of the power recovery to be a minimum value between the maximum recovery rate and a rate of the power recovery required to reach the pre-voltage-drop power at the minimum recovery time; increasing the power recovery by the second rate of the power recovery; and applying the maximum recovery rate until the pre-voltage-drop power is reached before the maximum recovery time if, at any time between the first recovery time and the second recovery time, the maximum recovery rate needs to be applied in order to meet the maximum recovery time.

The method of any preceding clause, wherein the voltage-drop grid event comprises one of a low-voltage ride through (LVRT) event or a multi-fault ride through (MFRT) event.

The method of any preceding clause, wherein calculating the minimum and maximum recovery times at the end of the voltage-drop grid event as the function of the pre-voltage-drop power and the post-voltage-drop power further comprises calculating the minimum and maximum recovery times at the end of the voltage-drop grid event based on a difference between the pre-voltage-drop power and the post-voltage-drop power.

The method of any preceding clause, wherein the minimum and maximum recovery times are a proportion of minimum and maximum times established for full power recovery.

The method of any preceding clause, wherein maintaining the power recovery at the minimum defined recovery rate from the first recovery time to a second recovery time further comprises activating a delayed torque recovery (DTR) function to maintain the power recovery at the minimum recovery rate while the one or more conditions are unfavorable for the power increase.

The method of any preceding clause, wherein the one or more conditions unfavorable for the power increase comprises increased mechanical loads while generator speed is decreasing.

The method of any preceding clause, wherein the minimum defined recovery rate is 0 PU per second.

The method of any preceding clause, further comprising determining the second rate of the power recovery to again reach the pre-voltage-drop power at the minimum recovery time after activating the DTR function.

The method of any preceding clause, further comprising deactivating the DTR function as soon as a time counter reaches a time limit to reach the pre-voltage-drop power at the maximum recovery time under the maximum recovery rate.

The method of any preceding clause, wherein the power generating asset comprises a wind turbine power system.

A wind turbine power system connected to an electrical grid in response to a voltage-drop grid event occurring in the electrical grid, the wind turbine power system comprising: a generator; a power converter coupled to the generator; and a controller comprising at least one processor configured to perform a plurality of operations, the plurality of operations comprising: calculating minimum and maximum recovery times at an end of the voltage-drop grid event as a function of a pre-voltage-drop power and a post-voltage-drop power; defining a maximum recovery rate of power recovery based on grid strength of the electrical grid; determining a first rate of power recovery such that the pre-voltage-drop power is reached at the minimum recovery time; increasing the post-voltage-drop power by the first rate until a first recovery time in which one or more conditions indicate further power increase is unfavorable; maintaining the power recovery at a minimum defined recovery rate from the first recovery time to a second recovery time; determining a second rate of the power recovery to be a minimum value between the maximum recovery rate and a rate of the power recovery required to reach the pre-voltage-drop power at the minimum recovery time; increasing the power recovery by the second rate of the power recovery; and applying the maximum recovery rate until the pre-voltage-drop power is reached before the maximum recovery time if, at any time between the first recovery time and the second recovery time, the maximum recovery rate needs to be applied in order to meet the maximum recovery time.

The wind turbine power system of any preceding clause, wherein the voltage-drop grid event comprises one of a low-voltage ride through (LVRT) event or a multi-voltage ride through (MVRT) event.

The wind turbine power system of any preceding clause, wherein calculating the minimum and maximum recovery times at the end of the voltage-drop grid event as the function of the pre-voltage-drop power and the post-voltage-drop power further comprises calculating the minimum and maximum recovery times at the end of the voltage-drop grid event based on a difference between the pre-voltage-drop power and the post-voltage-drop power.

The wind turbine power system of any preceding clause, wherein maintaining the power recovery at the minimum defined recovery rate from the first recovery time to a second recovery time further comprises activating a delayed torque recovery (DTR) function to maintain the power recovery at the minimum recovery rate while the one or more conditions are unfavorable for the power increase.

The wind turbine power system of any preceding clause, wherein the one or more conditions unfavorable for the power increase comprises increased mechanical loads while generator speed is decreasing.

The wind turbine power system of any preceding clause, wherein the minimum defined recovery rate is 0 PU per second.

The wind turbine power system of any preceding clause, further comprising determining the second rate of the power recovery to again reach the pre-voltage-drop power at the minimum recovery time after activating the DTR function.

The wind turbine power system of any preceding clause, further comprising deactivating the DTR function as soon as a time counter reaches a time limit to reach the pre-voltage-drop power at the maximum recovery time under the maximum recovery rate.

## Claims

1. A method for controlling a power generating asset connected to an electrical grid in response to a voltage-drop grid event occurring in the electrical grid, the method comprising:
calculating minimum and maximum recovery times at an end of the voltage-drop grid event as a function of a pre-voltage-drop power and a post-voltage-drop power;
defining a maximum recovery rate of power recovery based on grid strength of the electrical grid;
determining a first rate of the power recovery such that the pre-voltage-drop power is reached at the minimum recovery time;
increasing the post-voltage-drop power by the first rate until a first recovery time in which one or more conditions indicate further power increase is unfavorable;
maintaining the power recovery at a minimum defined recovery rate from the first recovery time to a second recovery time;
determining a second rate of the power recovery to be a minimum value between the maximum recovery rate and a rate of the power recovery required to reach the pre-voltage-drop power at the minimum recovery time;
increasing the power recovery by the second rate of the power recovery; and
applying the maximum recovery rate until the pre-voltage-drop power is reached before the maximum recovery time if, at any time between the first recovery time and the second recovery time, the maximum recovery rate needs to be applied in order to meet the maximum recovery time.

2. The method of claim 1, wherein the voltage-drop grid event comprises one of a low-voltage ride through (LVRT) event or a multi-fault ride through (MFRT) event.

3. The method of any preceding claim, wherein calculating the minimum and maximum recovery times at the end of the voltage-drop grid event as the function of the pre-voltage-drop power and the post-voltage-drop power further comprises calculating the minimum and maximum recovery times at the end of the voltage-drop grid event based on a difference between the pre-voltage-drop power and the post-voltage-drop power.

4. The method of any preceding claim, wherein the minimum and maximum recovery times are a proportion of minimum and maximum times established for full power recovery.

5. The method of any preceding claim, wherein maintaining the power recovery at the minimum defined recovery rate from the first recovery time to a second recovery time further comprises activating a delayed torque recovery (DTR) function to maintain the power recovery at the minimum recovery rate while the one or more conditions are unfavorable for the power increase.

6. The method of claim 5, wherein the one or more conditions unfavorable for the power increase comprises increased mechanical loads while generator speed is decreasing.

7. The method of claims 5-6, wherein the minimum defined recovery rate is 0 PU per second.

8. The method of claims 5-7, further comprising determining the second rate of the power recovery to again reach the pre-voltage-drop power at the minimum recovery time after activating the DTR function.

9. The method of claim 8, further comprising deactivating the DTR function as soon as a time counter reaches a time limit to reach the pre-voltage-drop power at the maximum recovery time under the maximum recovery rate.

10. The method of any preceding claim, wherein the power generating asset comprises a wind turbine power system.

11. A wind turbine power system connected to an electrical grid in response to a voltage-drop grid event occurring in the electrical grid, the wind turbine power system comprising:
a generator;
a power converter coupled to the generator; and
a controller comprising at least one processor configured to perform a plurality of operations, the plurality of operations comprising:
calculating minimum and maximum recovery times at an end of the voltage-drop grid event as a function of a pre-voltage-drop power and a post-voltage-drop power;
defining a maximum recovery rate of power recovery based on grid strength of the electrical grid;
determining a first rate of power recovery such that the pre-voltage-drop power is reached at the minimum recovery time;
increasing the post-voltage-drop power by the first rate until a first recovery time in which one or more conditions indicate further power increase is unfavorable;
maintaining the power recovery at a minimum defined recovery rate from the first recovery time to a second recovery time;
determining a second rate of the power recovery to be a minimum value between the maximum recovery rate and a rate of the power recovery required to reach the pre-voltage-drop power at the minimum recovery time;
increasing the power recovery by the second rate of the power recovery; and
applying the maximum recovery rate until the pre-voltage-drop power is reached before the maximum recovery time if, at any time between the first recovery time and the second recovery time, the maximum recovery rate needs to be applied in order to meet the maximum recovery time.

12. The wind turbine power system of claim 11, wherein the voltage-drop grid event comprises one of a low-voltage ride through (LVRT) event or a multi-voltage ride through (MVRT) event.

13. The wind turbine power system of claims 11-12, wherein calculating the minimum and maximum recovery times at the end of the voltage-drop grid event as the function of the pre-voltage-drop power and the post-voltage-drop power further comprises calculating the minimum and maximum recovery times at the end of the voltage-drop grid event based on a difference between the pre-voltage-drop power and the post-voltage-drop power.

14. The wind turbine power system of claims 11-13, wherein maintaining the power recovery at the minimum defined recovery rate from the first recovery time to a second recovery time further comprises activating a delayed torque recovery (DTR) function to maintain the power recovery at the minimum recovery rate while the one or more conditions are unfavorable for the power increase.

15. The wind turbine power system of claim 14, wherein the one or more conditions unfavorable for the power increase comprises increased mechanical loads while generator speed is decreasing; and/or
wherein the minimum defined recovery rate is 0 PU per second; and/or
further comprising determining the second rate of the power recovery to again reach the pre-voltage-drop power at the minimum recovery time after activating the DTR function; and/or
further comprising deactivating the DTR function as soon as a time counter reaches a time limit to reach the pre-voltage-drop power at the maximum recovery time under the maximum recovery rate.
